# EUROPÄISCHE PATENTSCHRIFT

(11) **EP 1 407 629 B1**
(45) Veröffentlichungstag und Bekanntmachung des Hinweises auf die Patenterteilung: **04.04.2007**
(21) Anmeldenummer: 01947098.8
(22) Anmeldetag: 18.07.2001
(51) Int. Cl.: H04Q 7/38, H04Q 7/32

(54) **TELEKOMMUNIKATIONSVERFAHREN, IDENTIFIZIERUNGSMODUL UND COMPUTERISIERTE DIENSTEINHEIT**
METHOD FOR TELECOMMUNICATION, IDENTIFICATION MODULE AND COMPUTERISED SERVICE UNIT
PROCEDE DE TELECOMMUNICATION, MODULE D'IDENTIFICATION ET UNITE DE SERVICE INFORMATISEE

(43) Veröffentlichungstag der Anmeldung: 14.04.2004
(73) Patentinhaber: Togewa Holding AG, 3000 Bern 32 (CH)
(72) Erfinder: HEUTSCHI, Walter, CH-3303 Jegenstorf (CH)
(74) Vertreter: Braun, André jr.
(86) Internationale Anmeldenummer: PCT/CH2001/000449
(87) Internationale Veröffentlichungsnummer: WO 2003/009623

(56) Entgegenhaltungen:
- WO-A-89/07380
- WO-A-98/24257
- WO-A-98/38817
- WO-A-99/55107
- DE-A- 19 829 797

## Beschreibung

### Technisches Gebiet

Die vorliegende Erfindung betrifft ein Telekommunikationsverfahren sowie ein dafür geeignetes Identifizierungsmodul und eine dafür geeignete computerisierte Diensteinheit. Die Erfindung betrifft insbesondere ein Telekommunikationsverfahren zum Einbuchen eines Teilnehmers bei einem besuchten Partner-Kommunikationsnetz, insbesondere ein Mobilfunknetz, wobei ein Identifizierungsmodul, in welchem eine Teilnehmeridentifizierung ausserhalb des Nummerbereichs des besuchten Partner-Kommunikationsnetzes gespeichert ist, mit dem Kommunikationsendgerät des Teilnehmers verbunden ist.

### Stand der Technik

Auf dem Gebiet der Mobilfunktelefonie versteht man unter dem Begriff "Roaming" den Betrieb eines mobilen Kommunikationsendgeräts, beispielsweise ein Mobilfunktelefon oder ein tragbarer Computer mit entsprechender Mobilfunkkomponente, ausserhalb des Heimnetzes. Roaming wird beispielsweise zwischen verschiedenen GSM-Netzen (Global System for Mobile Communication) oder UMTS-Netzen (Universal Mobile Telephone System) aber auch zwischen Mobilfunknetzen, die nach unterschiedlichen Standards arbeiten, eingesetzt. Um das direkte Roaming eines Teilnehmers zwischen zwei Mobilfunknetzen zu ermöglichen, müssen zwischen den betreffenden Betreibern der Mobilfunknetze Roaming-Abkommen abgeschlossen werden. Ein Teilnehmer wird in einem besuchten Mobilfunknetz (Visited Public Mobile Network, VPMN) mit seiner Teilnehmeridentifizierung (International Mobile Subscriber Identity, IMSI) aus dem Nummerbereich seines Heimmobilfunknetzes (Home Public Mobile Network, HPMN) in einer Besucherdatei (Visitor Location Register, VLR) eingebucht und sein Aufenthaltsort in einer Heimdatei (Home Location Register, HLR) des Heimmobilfunknetzes gespeichert, das heisst es wird ein sogenannter Location Update durchgeführt.

In der Patentanmeldung WO 98/10614 wird ein Telekommunikationsverfahren für indirektes Roaming beschrieben, welches einem Teilnehmer eines Heimmobilfunknetzes ermöglicht, sich einem besuchten Mobilfunknetz ohne Roaming-Abkommen mit dem Heimmobilfunknetz anzuschliessen, wobei der Anschluss durch Mittel, zum Beispiel eine Teilnehmeridentifizierung (IMSI) und eine Rufnummer (MSISDN = Mobile Subscriber Integrated Services Digital Network) erfolgt, die von einem Partnernetz zur Verfügung gestellt werden, das ein Roaming-Abkommen einerseits mit dem Heimmobilfunknetz und andererseits mit dem besuchten Mobilfunknetz hat.

Bei dem in WO98/10614 beschriebenen Verfahren enthält jedes Identifizierungsmodul der Teilnehmer des Heimmobilfunknetzes zwei fest gespeicherte Teilnehmeridentifizierungen. Jeder Teilnehmeridentifizierung wird eine unterschiedliche Rufnummer zugeteilt. Die erste Teilnehmeridentifizierung gehört dem Nummerbereich des Heimmobilfunknetzes, die zweite dem Nummerbereich des Partnernetzes. Um sich in einem besuchten Netz, das kein Roaming-Abkommen mit dem Heimmobilfunknetz hat, einzubuchen, kann der Teilnehmer die erste Teilnehmeridentifizierung vom Heimmobilfunknetz deaktivieren und die zweite Teilnehmeridentifizierung vom Partnernetz aktivieren, und wird dadurch im besuchten Netz wie ein Teilnehmer vom Partnernetz betrachtet, es kann also ein Roaming-Prozess vom besuchten Netz über das Partnernetz abgewickelt werden.

Da im Verfahren gemäss WO98/10614 jeder Teilnehmeridentifizierung eine andere, unterschiedliche Rufnummer zugeteilt ist, müssen die Anrufe mit der ersten Rufnummer für den Teilnehmer mit einem aufwendigen Mechanismus umgeleitet werden. Teilnehmerspezifische Daten, zum Beispiel Anrufumleitungen, Zusatznummern, usw., sind ausserdem ganz konventionell der Teilnehmeridentifizierung zugeordnet und somit nur im Heimmobilfunknetz oder in besuchten Mobilfunknetzen mit einem Roaming-Abkommen mit dem Heimmobilfunknetz verfügbar.

In der Patentschrift EP 0 990 364 wird ein ähnliches Telekommunikationsverfahren für indirektes Roaming wie in WO98/10614 beschrieben. Gemäss EP 0 990 364 werden allerdings der ersten Teilnehmeridentifizierung vom Heimmobilfunknetz und der zweiten Teilnehmeridentifizierung vom Partnernetz eine gemeinsame Rufnummer zugeordnet.

Sowohl die herkömmlichen standardisierten Verfahren für das direkte Roaming als auch die oben beschriebenen Verfahren für das indirekte Roaming weisen den Nachteil auf, dass der Teilnehmer im besuchten Mobilfunknetz als fremder Teilnehmer eingebucht ist und erheblich höhere Verbindungskosten als ein lokaler Teilnehmer zahlen muss. Mehrkosten können insbesondere auch dann auftreten, wenn zwei Teilnehmer aus dem selben Heimmobilfunknetz, die sich in einem gemeinsamen besuchten Mobilfunknetz aufhalten, miteinander kommunizieren und die Verbindung dabei über das Heimmobilfunknetz erstellt wird.

In der Patentanmeldung WO 98/38817 werden ein Verfahren und ein System für die Übermittlung von Funkinformationen an mobile Funkgeräte beschrieben. Gemäss WO 98/38817 werden in den mobilen Funkgeräten jeweils individuelle Funkinformationen gespeichert, die eine für das betreffende Funkgerät eindeutige logische Identifizierung, Kanalfrequenzen, Kryptographieschlüssel und weitere funkspezifische Daten umfassen und die im Funkgerät spezifisch für die Heimstadt des Benutzers programmiert sind. Wenn ein Benutzer eine fremde Stadt besuchen möchte, wählt er die zu besuchende Stadt gemäss WO 98/38817 aus einer im Funkgerät gespeicherten Liste aus, worauf das Funkgerät eine Anforderung für neue Funkinformationen für die ausgewählte zu besuchende Stadt über einen Gateway an einen Server sendet. Der Server übermittelt dem anfragenden Funkgerät gemäss WO 98/38817 Funkinformationen für die ausgewählte Stadt, einschliesslich einer neuen logischen Identifizierung, die das Funkgerät in der ausgewählten Stadt als besuchendes Funkgerät identifiziert. Die neuen Funkinformationen werden vom Funkgerät für die Kommunikation innerhalb der ausgewählten Stadt verwendet, wenn es diese Stadt erreicht. Das System und das Verfahren gemäss WO 98/38817 weisen den Nachteil auf, dass der Benutzer vor dem Besuch einer Stadt bewusst Funkinformationen für diese zu besuchende Stadt anfordern und in sein Funkgerät herunterladen lassen muss, um sein Funkgerät für die zu besuchende Stadt kommunikationsfähig zu konfigurieren. Wenn sein Funkgerät für die zu besuchende Stadt umkonfiguriert ist, ist es in der aktuellen Stadt typischerweise nicht mehr kommunikationsfähig und wenn der Benutzer seine Absicht unerwarteterweise ändert, muss er das Funkgerät wieder zurückkonfigurieren. Zudem wird die benutzerbetätigte Auswahl der zu besuchenden Stadt von den Benutzern oft als mühsam empfunden und erschwert überdies transparente unterbruchlose Übergänge zwischen den Städten.

### Darstellung der Erfindung

Es ist eine Aufgabe der vorliegenden Erfindung, ein Telekommunikationsverfahren zum Einbuchen eines Teilnehmers bei einem besuchten Partner-Kommunikationsnetz sowie für dieses Telekommunikationsverfahren geeignete Vorrichtungen vorzuschlagen, die die Nachteile des Stands der Technik vermeiden.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Ein Teilnehmer hat ein mit einem Kommunikationsendgerät verbindbares Identifizierungsmodul, in welchem eine erste Teitnehmeridentifizierung gespeichert ist, die im Nummerbereich des Heirnnetzbetreibers des Teilnehmers oder im Nummerbereich eines Dienstanbieters, der Dienste eines virtuellen Kommunikationsnetzes anbietet, liegt. Typischerweise hat ein solcher Dienstanbieter eines virtuellen Netzes zwar einen zugewiesenen Nummerbereich für Teilnehmeridentifizierungen, verfügt jedoch über kein eigenes Kommunikationsnetz und/oder, im Fall eines Mobilfunknetzes, besitzt keine Lizenz für Sendefrequenzen. Der Heimnetzbetreiber, respektive der Dienstanbieter eines virtuellen Netzes, hat ein Partnerschaftsabkommen mit dem Betreiber eines Partner-Kommunikationsnetzes, im Fall eines Mobilfunknetzes beispielsweise eine Art Roaming-Abkommen. Der Teilnehmer besucht das Partner-Kommunikationsnetz mit seinem Kommunikationsendgerät, das mit dem Identifizierungsmodul verbunden ist. Beim Einschalten des Kommunikationsendgeräts im besuchten Partner-Kommunikationsnetz wird in herkömmlicher Weise ein Roaming-Prozess eingeleitet und ein Location Update durchgeführt, da die im Identifizierungsmodul gespeicherte Teilnehmeridentifizierung ausserhalb des Nummerbereichs des besuchten Partner-Kommunikationsnetzes liegt.

Die oben genannten Ziele werden durch die Erfindung insbesondere dadurch erreicht, dass von einer computerisierten Diensteinheit eine zweite Teilnehmeridentifizierung aus dem Nummerbereich des besuchten Partner-Kommunikationsnetzes an das Kommunikationsendgerät im besuchten Partner-Kommunikationsnetz übermittelt wird, dass die zweite Teilnehmeridentifizierung im mit dem Kommunikationsendgerät verbundenen Identifizierungsmodul gespeichert und aktiviert wird, und dass der Teilnehmer mit der zweiten Teilnehmeridentifizierung im besuchten Partner-Kommunikationsnetz eingebucht wird. Der Vorteil der Übertragung der zweiten Teilnehmeridentifizierung an das Kommunikationsendgerät im besuchten Partner-Kommunikationsnetz liegt darin, dass der Teilnehmer dadurch in jedem Partner-Kommunikationsnetz dynamisch zu einem lokalen Teilnehmer des besuchten Partner-Kommunikationsnetzes gemacht werden kann, da die zweite Teilnehmeridentifizierung im Nummerbereich des besuchten Partner-Kommunikationsnetzes liegt.

Vorzugsweise werden Teilnehmeridentifizierungen aus dem Nummerbereich von Partner-Kommunikationsnetzen in einer Datenbank der Diensteinheit gespeichert, wird eine Datenmeldung mit einer Dienstanfrage für die zweite Teilnehmeridentifizierung vom Kommunikationsendgerät im besuchten Partner-Kommunikationsnetz über das besuchte Partner-Kommunikationsnetz an die Diensteinheit übermittelt, und wird die zweite Teilnehmeridentifizierung auf Grund der empfangenen Dienstanfrage aus der Datenbank entnommen und über das besuchte Partner-Kommunikationsnetz an das anfragende Kommunikationsendgerät übermittelt. Durch die Übermittlung der Dienstanfrage vom Kommunikationsendgerät an die Diensteinheit kann die Übertragung einer zweiten Teilnehmeridentifizierung aus dem Nummerbereich des besuchten Partner-Kommunikationsnetzes zu wählbaren Zeitpunkten, beispielsweise auf Initiative des Teilnehmers, eingeleitet werden.

In einer bevorzugten Ausführungsvariante wird die erste Teilnehmeridentifizierung aus dem Nummerbereich des Betreibers der Diensteinheit gewählt, wird die erste Teilnehmeridentifizierung einer Rufnummer zugeordnet in einer Heimdatei der Diensteinheit gespeichert, und wird die zweite Teilnehmeridentifizierung in der Diensteinheit mit derjenigen Rufnummer verknüpft, die der ersten Teilnehmeridentifizierung zugeordnet ist. Durch die Wahl der ersten Teilnehmeridentifizierung aus dem Nummerbereich des Betreibers der Diensteinheit und durch die Speicherung der ersten Teilnehmeridentifizierung in einer Heimdatei der Diensteinheit wird ermöglicht, dass Teilnehmer, denen jeweils eine erste Teilnehmeridentifizierung aus dem Nummerbereich des Betreibers der Diensteinheit zugeteilt wurde, international als Teilnehmer dieses Betreibers erkannt werden und Location Updates beim Einbuchen in Partner-Kommunikationsnetze an die Heimdatei des Betreibers geleitet werden können, ohne dass der Betreiber selber über Kommunikationsnetze verfügen muss, sondern bloss ein Dienstanbieter eines virtuellen Netzes sein kann. Durch die Verknüpfung der ersten und zweiten Teilnehmeridentifizierung mit einer gemeinsamen Rufnummer wird ermöglicht, dass der Teilnehmer in allen Partner-Kommunikationsnetzen, in denen er eingebucht ist, mit der selben Rufnummer erreicht werden kann. Das gilt nicht nur für Mobilfunknetze, sondern insbesondere auch für Festnetze, in denen sich der Teilnehmer mittels einer Teilnehmeridentifizierung einbuchen kann.

In einer Ausführungsvariante werden Kostendaten vom besuchten Partner-Kommunikationsnetz zur Verrechnung an eine Diensteinheit des durch die erste Teilnehmeridentifizierung identifizierten Betreibers übermittelt.

In einer bevorzugten Ausführungsvariante wird ein mobiles Kommunikationsendgerät verwendet, wird ein Mobilfunknetz als besuchtes Partner-Kommunikationsnetz gewählt, und werden Mobilteilnehmeridentifizierungen als erste und zweite Teilnehmeridentifizierungen verwendet.

### Kurze Beschreibung der Zeichnungen

Nachfolgend wird eine Ausführung der vorliegenden Erfindung anhand eines Beispieles beschrieben. Das Beispiel der Ausführung wird durch die folgende einzige beigelegte Figur illustriert:

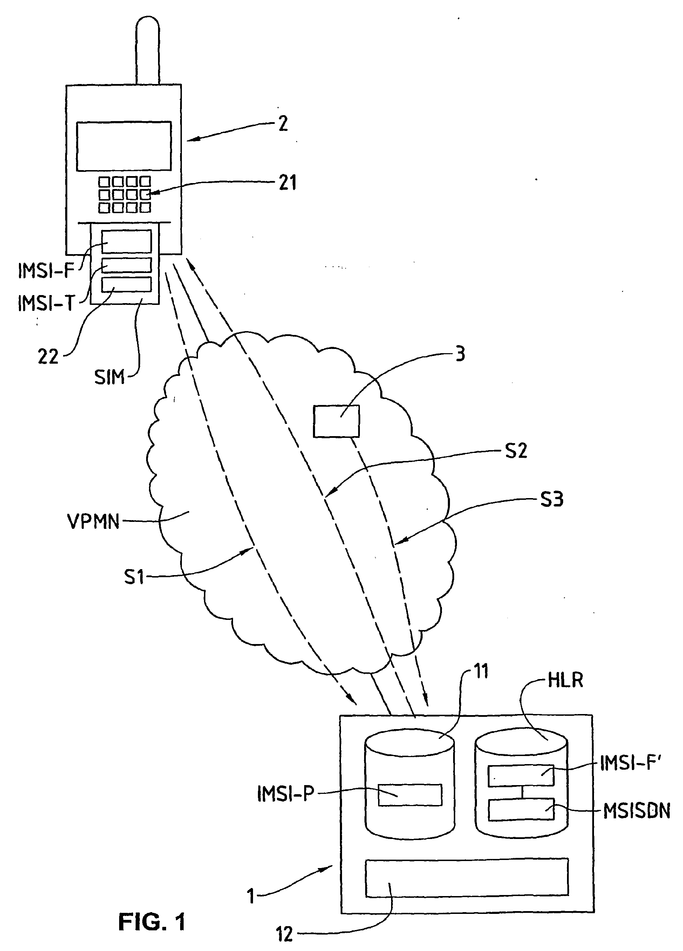

Figur 1 zeigt ein Blockdiagramm, welches schematisch ein Kommunikationsendgerät und eine computerisierte Diensteinheit illustriert, die über ein Kommunikationsnetz Daten austauschen.

### Wege zur Ausführung der Erfindung

In der Figur 1 bezieht sich das Bezugszeichen 2 auf ein Kommunikationsendgerät. Das Kommunikationsendgerät 2 ist vorzugsweise ein Mobilfunkgerät, beispielsweise ein Mobilfunktelefon oder ein tragbarer Laptop- oder Palmtop-Computer mit einer Mobilfunkkomponente. Das Kommunikationsendgerät 2 könnte aber auch für den Anschluss an ein Festnetz eingerichtet sein, insbesondere ein digitales Festnetz, in welchem Teilnehmer mit Teilnehmeridentifizierungen eingebucht werden können, zum Beispiel ein ISDN-Netz (Integrated Services Digital Network), ein IP-Netz (Internet Protocol) oder ein WLAN (Wireless Local Area Network) oder WAN (Wide Area Network).

Wie in der Figur 1 schematisch dargestellt, ist das Kommunikationsendgerät 2 mit einem Identifizierungsmodul SIM verbunden. Das Identifizierungsmodul SIM ist mit dem Kommunikationsendgerät 2 über eine kontaktbehaftete Schnittstelle entfernbar verbunden und umfasst Speicherelemente zur Speicherung von Datenelementen sowie einen programmierbaren Prozessor und ein programmiertes Softwaremodul 22, das beispielsweise auf dem SIM-Toolkit oder auf Java basiert (Java ist ein eingetragenes Warenzeichen der Firma Sun Microsystems Inc.). Die Funktionen des Prozessors und des programmierten Softwaremoduls 22 können auch mittels fest programmierten Schaltkreisen ausgeführt werden. Das Identifizierungsmodul SIM ist vorzugsweise eine SIM-Karte (Subscriber Identification Module) in der Form einer Chipkarte. Im Identifizierungselement SIM ist eine Teilnehmeridentifizierung IMSI-F fest und schreibgeschützt gespeichert.

In der Figur 1 bezieht sich das Bezugszeichen VPMN auf ein Kommunikationsnetz, vorzugsweise ein Mobilfunknetz, beispielsweise ein GSM-Netz (Global System for Mobile Communication) oder ein UMTS-Netz (Universal Mobile Telephone System) oder ein anderes terrestrisches oder satellitenbasiertes Mobilfunknetz. Das Kommunikationsnetz VPMN könnte, wie bereits oben erwähnt, auch ein Festnetz sein, in welches sich Teilnehmer mittels Teilnehmeridentifizierungen einbuchen können.

Die Teilnehmeridentifizierungen sind vorzugsweise international gültige Teilnehmeridentifizierungen, die typischerweise hierarchisch strukturiert sind. Die Teilnehmeridentifizierungen sind vorzugsweise Mobilteilnehmeridentifizierungen, beispielsweise sogenannte International Mobile Subscriber Identity (IMSI) Nummern. Die IMSI-Nummern sind beispielsweise in der Norm GSM 03.03 vom European Telecommunications Standards Institute (ETSI) auf fünfzehn Zeichen festgelegt, wobei, wie in der nachfolgenden Tabelle 1 dargestellt ist, die ersten drei Zeichen den Ländercode bilden (Mobile Country Code, MCC), die nachfolgenden ein oder zwei Zeichen den Netzwerkcode bilden (Mobile Network Code, MNC) und die anschliessenden zehn oder elf Zeichen den Teilnehmercode bilden (Mobile Subscriber Identification Number, MSIN). Die ersten Zeichen des Teilnehmercodes identifizieren die Heimdatei (Home Location Register, HLR), in der die Daten des betreffenden Teilnehmers gespeichert sind.

**Tabelle 1**

| | | |
|---|---|---|
| MCC | MNC | MSIN |

Dem lizenzierten Betreiber des Kommunikationsnetzes VPMN kann folglich ein Nummerbereich zugeteilt werden, innerhalb dessen die Teilnehmeridentifizierungen für das Kommunikationsnetz VPMN zugeteilt werden können. Anhand der Teilnehmeridentifizierung kann zudem die Zugehörigkeit des betreffenden Teilnehmers zu einem Kommunikationsnetz, respektive dessen Betreiber, bestimmt werden.

In der Figur 1 bezieht sich das Bezugszeichen 1 auf eine computerisierte Diensteinheit, die mit dem Kommunikationsnetz VPMN verbunden ist. Typischerweise ist die Diensteinheit 1 nicht direkt, sondern über Verbindungsnetze und/oder Vermittlungsstellen mit dem Kommunikationsnetz VPMN verbunden. Die Diensteinheit 1 umfasst einen oder mehrere Computer, ein programmiertes Softwaremodul 12, eine Datenbank 11 und vorzugsweise eine Heimdatei HLR, die auf dem oder den Computern ausgeführt werden. In der Heimdatei HLR sind Teilnehmeridentifizierungen IMSI-F' von Teilnehmern gespeichert, die sich damit für Dienste der Diensteinheit 1 identifizieren können. Wie in der Figur 1 schematisch dargestellt, sind den Teilnehmeridentifizierungen IMSI-F' in der Heimdatei HLR jeweils eine Rufnummer MSISDN zugeordnet. In der Datenbank 11 sind Teilnehmeridentifizierungen IMSI-P aus dem Nummerbereich von Partner-Kommunikationsnetzen, beispielsweise das Kommunikationsnetz VPMN, gespeichert. Diese Teilnehmeridentifizierungen IMSI-P werden dem Betreiber der Diensteinheit 1 auf Grund von Partnerschafts-Abkommen mit Betreibern von Partner-Kommunikationsnetzen zugewiesen, beispielsweise als Nummerbereich oder als Satz von individuellen Nummern.

Wenn der Teilnehmer mit seinem Kommunikationsendgerät 2 und dem damit verbundenen Identifizierungsmodul SIM das Kommunikationsnetz VPMN besucht, wird die im Identifizierungsmodul SIM fest gespeicherte IMSI-F beim Aktivieren des Kommunikationsendgeräts 2 an das besuchte Kommunikationsnetz VPMN übermittelt. Die Teilnehmeridentifizierung IMSI-F ist vorzugsweise aus dem Nummerbereich des Betreibers der Diensteinheit 1, wo sie in der Heimdatei HLR gespeichert ist. Die Teilnehmeridentifizierung IMSI-F könnte jedoch auch aus dem Nummerbereich eines vom besuchten Kommunikationsnetz VPMN verschiedenen Netzes sein und in der Heimdatei dieses anderen Netzes gespeichert sein. Da die Teilnehmeridentifizierung IMSI-F nicht aus dem Nummerbereich des besuchten Kommunikationsnetzes VPMN ist, wird ein herkömmlicher Roaming-Prozess eingeleitet. Dabei wird die Teilnehmeridentifizierung IMSI-F in einer nicht dargestellten Besucherdatei (Visitor Location Register, VLR) des besuchten Kommunikationsnetzes VPMN gespeichert und ein sogenannter Location Update durchgeführt, wodurch der Aufenthaltsort des besuchenden Teilnehmers an die Heimdatei übermittelt wird, die durch die IMSI-F identifiziert wird, beispielsweise an die Heimdatei HLR in der Diensteinheit 1.

Wie in der Figur 1 dargestellt, wird in einem ersten Schritt S1 eine Dienstanfrage für eine Teilnehmeridentifizierung aus dem Nummerbereich des besuchten Kommunikationsnetzes VPMN vom Kommunikationsendgerät 2 über das Kommunikationsnetz VPMN an die Diensteinheit 1 übermittelt. Diese Dienstanfrage wird mittels einer Datenmeldung übermittelt, beispielsweise eine SMS-Meldung (Short Message Services) oder eine USSD-Meldung (Unstructured Supplementary Services Data). Die Datenmeldung wird durch das programmierte Softwaremodul 22 generiert, beispielsweise nach dem Betätigen einer vordefinierten Funktionstaste, oder sie wird durch den Teilnehmer mittels der Bedienungselemente 21 eingegeben.

Die Datenmeldung mit der Dienstanfrage wird in der Diensteinheit 1 durch das Softwaremodul 12 entgegengenommen und analysiert. Auf Grund der entgegengenommenen Datenmeldung kann das Softwaremodul 12 das Kommunikationsnetz VPMN bestimmen, das vom Teilnehmer besucht wird, und der Datenbank 11 eine entsprechende Teilnehmeridentifizierung IMSI-P aus dem Nummerbereich des besuchten Kommunikationsnetzes VPMN entnehmen und im Schritt S2 an das Kommunikationsendgerät 2 übermitteln, beispielsweise in einer Datenmeldung, wie oben für die Dienstanfrage angegeben wurde. Falls die Teilnehmeridentifizierung IMSI-F des anfragenden Teilnehmers in der Heimdatei HLR der Diensteinheit 1 eingetragen ist, erstellt das Softwaremodul 12 zudem eine Verknüpfung der zugewiesenen Teilnehmeridentifizierung IMSI-P mit der Rufnummer MSISDN, die in der Heimdatei HLR der Teilnehmeridentifizierung IMSI-F des anfragenden Teilnehmers zugeordnet ist. Dadurch kann der Teilnehmer in allen besuchten Partner-Kommunikationsnetzen VPMN unter der selben Rufnummer erreicht werden.

Für den Fall, dass die Teilnehmeridentifizierung IMSI-F des Teilnehmers in der Heimdatei HLR der Diensteinheit 1 eingetragen ist, können dem Teilnehmer durch das Softwaremodul 2 optional auch Teilnehmeridentifizierungen IMSI-P automatisch aus dem Nummerbereich eines besuchten Kommunikationsnetzes VPMN zugewiesen und übermittelt werden, sobald ein Location Update betreffend den Teilnehmer aus dem besuchten Kommunikationsnetz VPMN in der Diensteinheit 1 empfangen wird. Diese Option kann beispielsweise in der Heimdatei HLR der Diensteinheit 1 für den Teilnehmer spezifiziert werden.

Im Kommunikationsendgerät 2 wird die Datenmeldung mit der Teilnehmeridentifizierung IMSI-P aus dem Nummerbereich des besuchten Kommunikationsnetzes VPMN durch das Softwaremodul 22 entgegengenommen und im Identifizierungsmodul SIM als temporäre Teilnehmeridentifizierung IMSI-T gespeichert. Die temporäre Teilnehmeridentifizierung IMSI-T wird vorzugsweise schreibgeschützt gespeichert, so dass sie vom Teilnehmer nicht manipuliert werden kann. Die fest gespeicherte Teilnehmeridentifizierung IMSI-F wird durch das Softwaremodul 22 deaktiviert, respektive die temporäre Teilnehmeridentifizierung IMSI-T aktiviert. Die Aktivierung, respektive Deaktivierung, erfolgt beispielsweise durch Setzen, respektive Zurücksetzen, von Flags, die der temporären Teilnehmeridentifizierung IMSI-T und der festen Teilnehmeridentifizierung IMSI-F jeweils zugeordnet sind. Die Aktivierung der temporären Teilnehmeridentifizierung IMSI-T, respektive die Deaktivierung der fest gespeicherten Teilnehmeridentifizierung IMSI-F kann beispielsweise durch benutzerwählbare Funktionen des Softwaremoduls 22 rückgängig gemacht werden. Dabei kann die temporäre Teilnehmeridentifizierung IMSI-T zum Beispiel wahlweise gelöscht oder für spätere Reaktivierung im Speicher belassen werden. Der Teilnehmer kann sich mit der aktivierten temporären Teilnehmeridentifizierung IMSI-T in das besuchte Kommunikationsnetz VPMN einbuchen und wird dann durch das besuchte Kommunikationsnetz VPMN als lokaler Teilnehmer erkannt und in die nicht dargestellte Heimdatei des besuchten Kommunikationsnetzes VPMN eingetragen.

Wie in der Figur 1 dargestellt ist, werden im Schritt S3 Kostendaten, beispielsweise sogenannte Call Detail Records (CDR), die mittels der temporären IMSI-T erstellte Verbindungen betreffen, vom besuchten Kommunikationsnetz VPMN an die Diensteinheit 1 übermittelt. In der Vermittlungsstelle 3 des besuchten Kommunikationsnetzes VPMN, im sogenannten Mobile Switching Centre (MSC), sind Teilnehmeridentifizierungen IMSI-P aus dem Nummerbereich des Kommunikationsnetzes VPMN, die auf Grund eines Partnerschaftsabkommens dem Betreiber der Diensteinheit 1 zugewiesen wurden, einer Identifizierung des betreffenden Betreibers oder einer Identifizierung, zum Beispiel eine Adresse, der betreffenden Diensteinheit 1 zugeordnet gespeichert. Die Vermittlungsstelle 3, respektive ein entsprechend programmiertes Softwaremodul in der Vermittlungsstelle 3, erkennt, dass die temporäre Teilnehmeridentifizierung IMSI-T, mittels derer eine Verbindung erstellt wird, eine Teilnehmeridentifizierung IMSI-P ist, die dem Betreiber der Diensteinheit 1 zugewiesen wurde, und übermittelt die Kostendaten an die Diensteinheit 1. Obwohl der Teilnehmer im besuchten Kommunikationsnetz VPMN mit einer temporären Teilnehmeridentifizierung IMSI-T aus dem Nummerbereich des besuchten Kommunikationsnetzes VPMN eingebucht ist, können die Kostendaten also an die Diensteinheit 1 übermittelt werden, deren Betreiber vorzugsweise durch die fest gespeicherte Teilnehmeridentifizierung IMSI-F identifiziert wird. In der Diensteinheit 1 können dem anfragenden Teilnehmer zudem Vermittlungsgebühren für die Zuweisung von Teilnehmeridentifizierungen IMSI-P aus dem Nummerbereich von besuchten Kommunikationsnetzen VPMN verrechnet werden.

### Gewerbliche Anwendbarkeit

Die vorliegende Erfindung kann weltweit im Verbund mit Mobilfunknetzen für die Mobilfunktelefonie eingesetzt werden und findet auch Verwendung in Festnetzen, in denen Teilnehmer mit Teilnehmeridentifizierungen eingebucht werden. Mit der vorliegenden Erfindung wird einem Teilnehmer ermöglicht, sich weltweit als lokaler Teilnehmer in besuchte Kommunikationsnetze einzubuchen, insbesondere in Mobilfunknetze.

### Legende der Bezugszeichen

- 1: Computerisierte Diensteinheit
- 2: Kommunikationsendgerät (Mobilfunktelefon)
- 3: Vermittlungsstelle (Mobile Switching Centre)
- 11: Datenbank .
- 12: Programmiertes Softwaremodul
- 21: Bedienungselemente
- 22: Programmiertes Softwaremodul
- HLR: Heimdatei (Home Location Register)
- IMSI-F, lMSI-F': Feste Teilnehmeridentifizierung (Fixed International Mobile Subscriber Identity)
- IMSI-P: Teilnehmeridentifizierung aus dem Partner-Kommunikationsnetz (Partner International Mobile Subscriber Identity)
- IMSI-T: Temporäre Teilnehmeridentifizierung (Temporary International Mobile Subscriber Identity)
- MSISDN: Rufnummer (Mobile Subscriber Integrated Services Digital Network)
- SIM: Identifizierungsmodul (Subscriber Identification Module)
- S1: Übermittlung der Dienstanfrage für eine Teilnehmeridentifizierung aus dem Nummerbereich des besuchten Kommunikationsnetzes
- S2: Übermittlung der Teilnehmeridentifizierung aus dem Nummerbereich des besuchten Kommunikationsnetzes
- S3: Übermittlung von Kostendaten
- VPMN: Besuchtes Kommunikationsnetz (Visited Public Mobile Network)

## Patentansprüche

1. Telekommunikationsverfahren, zum Einbuchen eines Teilnehmers bei einem besuchten Partner-Kommunikationsnetz (VPMN), wobei ein Identifizierungsmodul (SIM) mit dem Kommunikationsendgerät (2) des Teilnehmers verbunden wird, in welchem ldentifizierungsmodul (SIM) eine erste Teilnehmeridentifizierung (IMSI-F) gespeichert ist, die ausserhalb des Nummerbereichs des besuchten Partner-Kommunikationsnetzes (VPMN) liegt, **dadurch gekennzeichnet,**
**dass** von einer computerisierten Diensteinheit (1) eine zweite Teilnehmeridentifizierung (IMSI-T) aus dem Nummerbereich des besuchten Partner-Kommunikationsnetzes (VPMN) an das Kommunikationsendgerät (2) im besuchten Pärtner-Kommunikationsnetz (VPMN) übermittelt wird,
**dass** die zweite Teilnehmeridentifizierung (IMSI-T) im Identifizierungsmodul (SIM) gespeichert wird, und
**dass** der Teilnehmer mit der zweiten Teilnehmeridentifizierung (IMSI-T) im besuchten Partner-Kommunikationsnetz (VPMN) eingebucht wird.

2. Telekommunikationsverfahren gemäss Anspruch 1, **dadurch gekennzeichnet, dass** Teilnehmeridentifizierungen (IMSI-P) aus dem Nummerbereich von Partner-Kommunikationsnetzen (VPMN) in einer Datenbank (11) der Diensteinheit (1) gespeichert werden, dass eine Datenmeldung mit einer Dienstanfrage für die zweite Teilnehmeridentifzierung (IMSI-T) vom Kommunikätionsendgerät (2) im besuchten Partner-Kommunikationsnetz (VPMN) über das besuchte Partner-Kommunikationsnetz (VPMN) an die Diensteinheit (1) übermittelt wird, und dass die zweite Teilnehmeridentifizierung (IMSI-T) auf Grund der empfangenen Dienstanfrage aus der Datenbank (11) entnommen und über das besuchte Partner-Kommunikationsnetz (VPMN) an das anfragende Kommunikationsendgerät (2) übermittelt wird.

3. Telekommunikationsverfahren gemäss einem der Ansprüche 1 oder 2, **dadurch gekennzeichnet, dass** die erste Teilnehmeridentifizierung (IMSI-F) aus dem Nummerbereich des Betreibers der Diensteinheit (1) gewählt wird, dass die erste Teilnehmeridentifizierung (IMSI-F') einer Rufnummer (MSISDN) zugeordnet in einer Heimdatei (HLR) der Diensteinheit (1) gespeichert wird, und dass die zweite Teilnehmeridentifizierung (IMSI-T) in der Diensteinheit (1) mit derjenigen Rufnummer (MSISDN) verknüpft wird, die der ersten Teilnehmeridentifizierung (IMSI-F') zugeordnet ist.

4. Telekommunikationsverfahren gemäss einem der Ansprüche 1 bis 3, **dadurch gekennzeichnet, dass** Kostendaten vom besuchten Partner-Kommunikationsnetz (VPMN) zur Verrechnung an eine Diensteinheit (1-) des durch die erste Teilnehmeridentifizierung (IMSI-F) identifizierten Betreibers übermittelt werden.

5. Telekommunikationsverfahren gemäss einem der Ansprüche 1 bis 4, **dadurch gekennzeichnet, dass** ein mobiles Kommunikationsendgerät (2) verwendet wird, dass ein Mobilfunknetz als besuchtes Partner-Kommunikationsnetz (VPMN) gewählt wird, und dass Mobilteilnehmeridentifizierungen als erste und zweite Teilnehmeridentifizierungen (IMSI-F, IMSI-T) verwendet werden.

6. Telekommunikationsverfahren gemäss Anspruch 1, **dadurch gekennzeichnet, dass** eine Dienstanfrage für die zweite Teilnehmeridentifizierung (IMSI-T) vom Kommunikationsendgerät (2) im besuchten Partner-Kommunikationsnetz (VPMN) über das besuchte Partner-Kommunikationsnetz (VPMN) an die Diensteinheit (1) übermittelt wird.

7. Telekommunikationsverfahren gemäss Anspruch 1, **dadurch gekennzeichnet, dass** die erste Teilnehmeridentifizierung (IMSI-F') in einer Heimdatei (HLR) der Diensteinheit (1) gespeichert wird, dass die erste Teilnehmeridentifizierung (IMSI-F) vom Kommunikationsendgerät (2) an das besuchte Partner-Kommunikationsnetz (VPMN) übermittelt wird, und dass beim Empfang eines den Teilnehmer betreffenden Location Updates aus dem besuchten Kommunikationsnetz (VPMN) in der Diensteinheit (1) die zweite Teilnehmeridentifizierung (IMSI-T) aus dem Nummerbereich des besuchten Partner-Kommunikationsnetzes (VPMN) von der computerisierten Diensteinheit (1) automatisch an das Kommunikationsendgerät (2) im besuchten Partner-Kommunikationsnetz (VPMN) übermittelt wird.

8. ldentifizierungsmodul (SIM) eines Teilnehmers zur Verwendung in einem Kommunikationsverfahren gemäss einem der Ansprüche 1 bis 7, welches Identifizierungsmodul (SIM) mit einem Kommunikationsendgerät (2) verbindbar ist, in welchem Identifizierungsmodul (SIM) eine erste Teilnehmeridentifizierung (IMSI-F) gespeichert ist, die ausserhalb des Nummerbereichs eines Partner-Kommunikationsnetzes (VPMN) liegt, umfassend Mittel zum:
- Entgegennehmen einer zweiten Teilnehmeridentifizierung (IMSI-T) aus dem Nummerbereich eines besuchten Partner-Kommunikationsnetzes, welche durch das Kommunikationsendgerät (2) im besuchten Partner-Kommunikationsnetz (VPMN) von einer computerisierten Diensteinheit (1) empfangen wurde,
- Speichern der zweiten Teilnehmeridentifizierung (IMSI-T) im Identifizierungsmodul (SIM), und
- Einbuchen des Teilnehmers mit der zweiten Teilnehmeridentifizierung (IMSI-T) im besuchten Partner-Kommunikationsnetz (VPMN).

9. Identifizierungsmodul (SIM) gemäss Anspruch 8, **dadurch gekennzeichnet, dass** es Mittel umfasst zum Generieren einer Datenmeldung mit einer Dienstanfrage für die zweite Teilnehmeridentifizierung (IMSI-T) und zum Übermitteln der generierten Datenmeldung mittels des Kommunikationsendgeräts (2) über das besuchte Partner-Kommunikationsnetz (VPMN) an die Diensteinheit (1).

10. Identifizierungsmodul (SIM) gemäss einem der Ansprüche 8 oder 9, **dadurch gekennzeichnet, dass** es mit einem mobilen Kommunikationsendgerät (2) verbindbar ist, und dass die erste und die zweite Teilnehmeridentifizierung (IMSI-F, lMSl-T) jeweils eine Mobilteilnehmeridentifizierung zur Identifizierung des Teilnehmers in einem Mobilftinknetz ist.

11. Computerisierte Diensteinheit (1) zur Verwendung in einem Kommunikationsverfahren gemäss einem der Ansprüche 1 bis 7, die mit einem Kommunikationsnetz (VPMN) verbindbar ist, umfassend:
eine Datenbank (11), in welcher Teilnehmeridentifizierungen (IMSI-P) aus dem Nummerbereich von Partner-Kommunikationsnetzen (VPMN) gespeichert sind, und
Mittel zum Übermitteln einer der Teilnehmeridentifizierungen (IMSI-T) an ein Kommunikationsendgerät (2), das eines der Partner-Kommunikationsnetze (VPMN) besucht.

12. Computerisierte Diensteinheit (1) gemäss Anspruch 11, **dadurch gekennzeichnet, dass** sie Mittel umfasst zum:
- Entgegennehmen von Datenmeldungen über Partner-Kommunikationsnetze (VPMN) von Kommunikationsendgeräten (2) in besuchten Partner-Kommunikationsnetzen (VPMN), wobei die Datenmeldungen Dienstanfragen für Teilnehmeridentifizierungen (IMSI-T) aus dem Nummerbereich der betreffenden Partner-Kommunikationsnetze (VPMN) enthalten,
- Entnehmen von Teilnehmeridentifizierungen (IMSI-T) aus der Datenbank (11) auf Grund der empfangenen Dienstanfragen; und
- Übermitteln der entnommenen Teilnehmeridentifizierungen (IMSI-T) über die Partner-Kommunikafionsnetze (VPMN) an die anfragenden Kommunikationsendgeräte (2).

13. Computerisierte Diensteinheit (1) gemäss einem der Ansprüche 11 oder 12, **dadurch gekennzeichnet, dass** sie eine Heimdatei (HLR) umfasst, in der Teilnehmeridentifizierungen (IMSI-F) aus dem Nummerbereich des Betreibers der Diensteinheit (1) gespeichert sind, wobei den Teilnehmer-identifizierungen (IMSI-F) jeweils Rufnummern (MSISDN) zugeordnet sind, und dass die Diensteinheit (1) Mittel umfasst zum Verknüpfen einer an ein anfragendes Kommunikationsendgeräf (2) übermittelten Teilnehmeridentifizierung (IMSI-T) aus dem Nummerbereich eines Partner-Kommunikationsnetzes (VPMN) mit derjenigen Rufnummer (MSISDN), die der Teilnehmeridentifizierung (IMSI-F) aus dem Nummerbereich des Betreibers zugeordnet ist, die den anfragenden Teilnehmer identifiziert.

14. Computerisierte Diensteinheit (1) gemäss einem der Ansprüche 11 bis 13, **dadurch gekennzeichnet, dass** das Kommunikationsnetz (VPMN) ein Mobilfunknetz ist, und dass die ersten und die zweiten Teilnehmeridentifizierungen (IMSI-F, IMSI-T) jeweils Mobilteilnehmeridentifizierungen zur Identifizierung des Teilnehmers im Mobilfunknetz sind.

15. Computerisierte Diensteinheit (1) gemäss Anspruch 11, **dadurch gekennzeichnet, dass** sie eine Heimdatei (HLR) umfasst, in der Teilnehmeridentifizierungen (IMSI-F') aus dem Nummerbereich des Betreibers der Diensteinheit (1) gespeichert sind, und dass sie Mittel umfasst:
- zum Entgegennehmen von Location Updates betreffend Kommunikationsendgeräte (2) in den besuchten Partner-Kommunikationsnetzen (VPMN) über die Partner-Kommunikationsnetze (VPMN), und
- zum automatischen Übermitteln von Teilnehmeridentifizierungen (IMSI-T) aus dem Nummerbereich besuchter Partner-Kommunikationsnetze (VPMN) über die Partner-Kommunikationsnetze (VPMN) an betreffende Kommunikationsendgeräte (2) in den besuchten Partner-Kommunikationsnetzen (VPMN) beim Empfang von Location Updates für betreffende Kommunikationsendgeräte (2).

## Claims

1. Method for telecommunication for registering a subscriber in a visited public mobile network (VPMN), wherein a subscriber identification module (SIM) is connected to the communication terminal (2) of the subscriber, and in which subscriber identification module (SIM) a first international mobile subscriber identity (IMSI-F) is stored which is outside the range of numbers of the visited public mobile network (VPMN),
**characterized**
**in that** a second international mobile subscriber identity (IMSI-T) from the range of numbers of the visited public mobile network (VPMN) is transmitted to the communication terminal (2) in the visited public mobile network (VPMN) via a computerized service unit (1),
that the second international mobile subscriber identity (IMSI-T) is stored in the subscriber identification module (SIM), and
that the subscriber is registered with the second international mobile subscriber identity (IMSI-T) in the visited public mobile network (VPMN).

2. Method for telecommunication according to Claim 1, **characterized in that** international mobile subscriber identities (IMSI-P) from the range of numbers of visited public mobile networks (VPMN) are stored in a database (11) of the service unit (1), that a data message with a service request for the second international mobile subscriber identity (IMSI-T) is transmitted to the service unit (1) by the communication terminal (2) in the visited public mobile network (VPMN) via the visited public mobile network (VPMN), and that the second international mobile subscriber identity (IMSI-T) is taken from the database (11) due to the received service request and is transmitted to the requesting communication terminal (2) via the visited public mobile network (VPMN).

3. Method for telecommunication according to one of Claims 1 or 2, **characterized in that** the first international mobile subscriber identity (IMSI-F) is selected from the range of numbers of the operator of the service unit (1), that the first international mobile subscriber identity (IMSI-F') is stored, allocated to a directory number (MSISDN), in a home location register (HLR) of the service unit (1), and that, in the service unit (1), the second international mobile subscriber identity (IMSI-T) is combined with the directory number (MSISDN) which is allocated to the first international mobile subscriber identity (IMSI-F').

4. Method for telecommunication according to one of Claims 1 to 3, **characterized in that** cost data of the visited public mobile network (VPMN) are transmitted for accounting purposes to a service unit (1) of the operator identified by the first international mobile subscriber identity (IMSI-F).

5. Method for telecommunication according to one of Claims 1 to 4, **characterized in that** a mobile communication terminal (2) is used, that a mobile radio network is selected as visited public mobile network (VPMN), and that mobile subscriber identities are used as first and second international mobile subscriber identities (IMSI-F), (IMSI-T).

6. Method for telecommunication according to Claim 1, **characterized in that** a service request for the second international mobile subscriber identity (IMSI-T) is transmitted from the communication terminal (2) in the visited public mobile network (VPMN) to the service unit (1) via the visited public mobile network (VPMN).

7. Method for telecommunication according to Claim 1, **characterized in that** the first international mobile subscriber identity (IMSI-F') is stored in a home location register (HLR) of the service unit (1), that the first international mobile subscriber identity (IMSI-F) is transmitted from the communication terminal (2) to the visited public mobile network (VPMN), and that, on reception of a location update related to the subscriber from the visited public mobile network (VPMN) in the service unit (1), the second international mobile subscriber identity (IMSI-T) from the range of numbers of the visited public mobile network (VPMN) is transmitted automatically via the computerized service unit (1) to the communication terminal (2) in the visited public mobile network (VPMN).

8. Subscriber identification module (SIM) of a subscriber for use in a communication method according to one of Claims 1 to 7, which subscriber identification module (SIM) can be connected to a communication terminal (2), in which subscriber identification module (SIM) a first international mobile subscriber identity (IMSI-F) is stored which is outside the range of numbers of a public mobile network (VPMN), comprising means for
- receiving a second international mobile subscriber identity (IMSI-T) from the range of numbers of a visited public mobile network (VPMN) which was received via the communication terminal (2) in the visited public mobile network (VPMN) from a computerized service unit (1),
- storing the second international mobile subscriber identity (IMSI-T) in the subscriber identification module (SIM), and
- registering the subscriber with the second international mobile subscriber identity (IMSI-T) in the visited public mobile network (VPMN).

9. Subscriber identification module (SIM) according to Claim 8, **characterized in that** it comprises means for generating a data message with a service request for the second international mobile subscriber identity (IMSI-T) and for transmitting the generated data message to the service unit (1) by means of the communication terminal (2) via the visited public mobile network (VPMN).

10. Subscriber identification module (SIM) according to one of Claims 8 or 9, **characterized in that** it can be connected to a mobile communication terminal (2), and that the first and second international mobile subscriber identity (IMSI-F, IMSI-T) in each case is a mobile subscriber identity for identifying the subscriber in a mobile radio network.

11. Computerized service unit (1) for use in a method for communication according to one of Claims 1 to 7, which can be connected to a visited public mobile network (VPMN) comprising:
a database (11) in which international mobile subscriber identities (IMSI-P) from the range of numbers of visited public mobile networks (VPMN) are stored, and
means for transmitting one of the international mobile subscriber identities (IMSI-T) to a communication terminal (2) which visits one of the visited public mobile networks (VPMN).

12. Computerized service unit (1) according to Claim 11, **characterized in that** it comprises means for:
- receiving data messages via public mobile networks (VPMN) from communication terminals (2) in visited public mobile networks (VPMN), wherein the data messages contain service requests for international mobile subscriber identities (IMSI-T) from the range of numbers of the relevant visited public mobile networks (VPMN),
- taking international mobile subscriber identities (IMSI-T) from the database (11) due to the received service requests, and
- transmitting the international mobile subscriber identities (IMSI-T) taken to the requesting communication terminals (2) via the visited public mobile networks (VPMN).

13. Computerized service unit (1) according to one of Claims 11 or 12, **characterized in that** it comprises a home location register (HLR) in which international mobile subscriber identities (IMSI-F) from the range of numbers of the operator of the service unit (1) are stored, wherein directory numbers (MSISDN) are in each case allocated to the international mobile subscriber identities (IMSI-F), and that the service unit (1) comprises means for combining an international mobile subscriber identity (IMSI-T) from the range of numbers of a public mobile network (VPMN), transmitted to a requesting communication terminal (2), with the directory number (MSISDN), which is allocated to the international mobile subscriber identity (IMSI-F) from the range of numbers of the operator which identifies the requesting subscriber.

14. Computerized service unit (1) according to one of Claims 11 to 13, **characterized in that** the public mobile network (VPMN) is a mobile radio network, and that the first and the second international mobile subscriber identities (IMSI-F, IMSI-T) are in each case mobile subscriber identities for identifying the subscriber in the mobile radio network.

15. Computerized service unit (1) according to Claim 11, **characterized in that** it comprises a home location register (HLR) in which international mobile subscriber identities (IMSI-F') from the range of numbers of the operator of the service unit (1) are stored, and that it comprises means:
- for receiving location updates relating to communication terminals (2) in the visited public mobile network (VPMN) via the visited public mobile networks (VPMN), and
- for automatically transmitting international mobile subscriber identities (IMSI-T) from the range of numbers of visited public mobile networks (VPMN) via the visited public mobile networks (VPMN) to relevant communication terminals (2) in the visited public mobile networks (VPMN) on reception of location updates for relevant communication terminals (2).

## Revendications

1. Procédé de télécommunication pour l'enregistrement d'un abonné dans un réseau de communication partenaire visité (VPMN), où un module d'identification (SIM) est relié à l'appareil de transmission de communications (2) de l'abonné, où dans le module d'identification (SIM) est sauvegardée une première identification d'abonné (IMSI-F) qui se situe en dehors de la zone de numéros du réseau de communication partenaire visité (VPMN), **caractérisé**
**en ce que** par une unité de service informatisée (1) est transmise une deuxième identification d'abonné (IMSI-T) de la zone de numéros du réseau de communication partenaire visité (VPMN) à l'appareil de transmission de communications (2) dans le réseau de communication partenaire visité (VPMN),
**en ce que** la deuxième identification d'abonné (IMSI-T) est sauvegardée dans le module d'identification (SIM), et
**en ce que** l'abonné est enregistré avec la deuxième identification d'abonné (IMSI-T) dans le réseau de communication partenaire visité (VPMN).

2. Procédé de télécommunication selon la revendication 1, **caractérisé en ce que** des identifications d'abonnés (IMSI-P) de la zone de numéros des réseaux de communication partenaires (VPMN) sont sauvegardées dans une base de données (11) de l'unité de service (1), qu'un message de données avec une demande de service pour la deuxième identification d'abonné (IMSI-T) est transmis depuis l'appareil de transmission de communications (2) dans le réseau de communication partenaire visité (VPMN) à travers le réseau de communication partenaire visité (VPMN) à l'unité de service (1) et que la deuxième identification d'abonné (IMSI-T) est extraite de la base de données (11) en fonction de la demande de service reçue et transmise à travers le réseau de communication partenaire visité (VPMN) à l'appareil de transmission de communications demandeur (2).

3. Procédé de télécommunication selon l'une quelconque des revendications 1 ou 2, **caractérisé en ce que** la première identification d'abonné (IMSI-F) est choisie dans la zone de numéros de l'opérateur de l'unité de service (1), **en ce que** la première identification d'abonné (IMSI-F') affectée à un numéro d'appel (MSISDN) est sauvegardée dans un registre des abonnés locaux (HLR) de l'unité de service (1) et **en ce que** la deuxième identification d'abonné (IMSI-T) est liée dans l'unité de service (1) à ce numéro d'appel (MSISDN) qui est affecté à la première identification d'abonné (IMSI-F').

4. Procédé de télécommunication selon l'une quelconque des revendications 1 à 3, **caractérisé en ce que** les données de coût sont transmises depuis le réseau de communication partenaire visité (VPMN) pour la facturation à une unité de service (1) de l'opérateur identifié par la première identification d'abonné (IMSI-F).

5. Procédé de télécommunication selon l'une quelconque des revendications 1 à 4, **caractérisé en ce qu'**un appareil de transmission de communications mobile (2) est utilisé, **en ce qu'**un réseau de radiocommunication mobile est choisi en tant que réseau de communication partenaire visité (VPMN) et **en ce que** des identifications d'abonnés mobiles sont utilisées en tant que premières et deuxièmes identifications d'abonnés (IMSI-F, IMSI-T).

6. Procédé de télécommunication selon la revendication 1, **caractérisé en ce qu'**une demande de service pour la deuxième identification d'abonné (IMSI-T) est transmise depuis l'appareil de transmission de communications (2) dans le réseau de communication partenaire visité (VPMN) à l'unité de service (1) à travers le réseau de communication partenaire visité (VPMN).

7. Procédé de télécommunication selon la revendication 1, **caractérisé en ce que** la première identification d'abonné (IMSI-F') est sauvegardée dans un registre des abonnés locaux (HLR) de l'unité de service (1), **en ce que** la première identification d'abonné (IMSI-F) est transmise depuis l'appareil de transmission de communications (2) au réseau de communication partenaire visité (VPMN) et **en ce que**, lors de la réception d'une Location Update concernant l'abonné depuis le réseau de communication visité (VPMN) dans l'unité de service (1), la deuxième identification d'abonné (IMSI-T) est transmise automatiquement par l'unité de service informatisée (1) de la zone de numéros du réseau de communication partenaire visité (VPMN) à l'appareil de transmission de communications (2) dans le réseau de communication partenaire visité (VPMN).

8. Module d'identification (SIM) d'un abonné pour l'utilisation dans un procédé de communication selon l'une quelconque des revendications 1 à 7, où le module d'identification (SIM) peut être relié à un appareil de transmission de communications (2), où dans le module d'identification (SIM) est sauvegardée une première identification d'abonné (IMSI-F) qui se situe à l'extérieur de la zone de numéros d'un réseau de communication partenaire (VPMN), comprenant des moyens pour :
- réceptionner une deuxième identification d'abonné (IMSI-T) de la zone de numéros d'un réseau de communication partenaire visité, qui a été réceptionnée par l'appareil de transmission de communications (2) dans le réseau de communication partenaire visité (VPMN) depuis une unité de service informatisée (1),
- sauvegarder la deuxième identification d'abonné (IMSI-T) dans le module d'identification (SIM), et
- enregistrer l'abonné avec la deuxième identification d'abonné (IMSI-T) dans le réseau de communication partenaire visité (VPMN).

9. Module d'identification (SIM) selon la revendication 8, **caractérisé en ce qu'**il comprend des moyens pour générer un message de données avec une demande de service pour la deuxième identification d'abonné (IMSI-T) et pour transmettre le message de données généré au moyen de l'appareil de transmission de communications (2) à travers le réseau de communication partenaire visité (VPMN) à l'unité de service (1).

10. Module d'identification (SIM) selon l'une quelconque des revendications 8 ou 9, **caractérisé en ce qu'**il peut être relié à un appareil de transmission de communications mobile (2) et **en ce que** la première et la deuxième identification d'abonné (IMSI-F, IMSI-T) sont à chaque fois une identification d'abonné mobile pour l'identification de l'abonné dans un réseau de radiocommunication mobile.

11. Unité de service informatisée (1) pour l'utilisation dans un procédé de communication selon l'une quelconque des revendications 1 à 7, qui peut être reliée à un réseau de communication (VPMN), comprenant :
une base de données (11) dans laquelle sont sauvegardées des identifications d'abonnés (IMSI-P) de la zone de numéros de réseaux de communication partenaires (VPMN), et
des moyens pour transmettre l'une des identifications d'abonnés (IMSI-T) à un appareil de transmission de communications (2) qui visite l'un des réseaux de communication partenaires (VPMN).

12. Unité de service informatisée (1) selon la revendication 11, **caractérisée en ce qu'**elle comprend des moyens pour :
- réceptionner des messages de données à travers des réseaux de communication partenaires (VPMN) depuis des appareils de transmission de communications (2) dans des réseaux de communication partenaires visités (VPMN), où les messages de données comprennent des demandes de service pour des identifications d'abonnés (IMSI-T) de la zone de numéros des réseaux de communication partenaires (VPMN) concernés,
- extraire des identifications d'abonnés (IMSI-T) de la base de données (11) en fonction des demandes de service reçues, et
- transmettre les identifications d'abonnés (IMSI-T) extraites à travers les réseaux de communication partenaires (VPMN) aux appareils de transmission de communications (2) demandeurs.

13. Unité de service informatisée (1) selon l'une quelconque des revendications 11 ou 12, **caractérisée en ce qu'**elle comprend un registre des abonnés locaux (HLR) dans lequel sont sauvegardées des identifications d'abonnés (IMSI-F) de la zone de numéros de l'opérateur de l'unité de service (1), où des numéros d'appel (MSISDN) sont à chaque fois attribués aux identifications d'abonnés (IMSI-F), et **en ce que** l'unité de service (1) comprend des moyens pour relier une identification d'abonné (IMSI-T) transmise à un appareil de transmission de communications demandeur (2) de la zone de numéros d'un réseau de communication partenaire (VPMN) à ce numéro d'appel (MSISDN) qui est attribué à l'identification d'abonné (IMSI-F) de la zone de numéros de l'opérateur, qui identifie l'abonné demandeur.

14. Unité de service informatisée (1) selon l'une quelconque des revendications 11 à 13, **caractérisée en ce que** le réseau de communication (VPMN) est un réseau de radiocommunication mobile et **en ce que** les premières et les deuxièmes identifications d'abonnés (IMSI-F, IMSI-T) sont à chaque fois des identifications d'abonnés mobiles pour l'identification de l'abonné dans le réseau de radiocommunication mobile.

15. Unité de service informatisée (1) selon la revendication 11, **caractérisée en ce qu'**elle comprend un registre des abonnés locaux (HLR) dans lequel sont sauvegardées des identifications d'abonnés (IMSI-F') de la zone de numéros de l'opérateur de l'unité de service (1) et **en ce qu'**elle comprend des moyens pour :
- réceptionner des Location Updates concernant des appareils de transmission de communications (2) dans les réseaux de communication partenaires visités (VPMN) à travers les réseaux de communication partenaires (VPMN), et
- transmettre automatiquement des identifications d'abonnés (IMSI-T) de la zone de numéros de réseaux de communication partenaires visités (VPMN) à travers les réseaux de communication partenaires (VPMN) à des appareils de transmission de communications (2) concernés dans les réseaux de communication partenaires visités (VPMN) lors de la réception de Location Updates pour les appareils de transmission de communications (2) concernés.
